(19) **Europäisches Patentamt / European Patent Office / Office européen des brevets**

(11) **EP 1 707 655 B1**

(12) **EUROPEAN PATENT SPECIFICATION**

(45) Date of publication and mention of the grant of the patent:
**31.07.2013 Bulletin 2013/31**

(21) Application number: **05781536.7**

(22) Date of filing: **31.08.2005**

(51) Int Cl.:
*D01F 9/127* (2006.01)      *B82B 1/00* (2006.01)
*C01B 31/02* (2006.01)      *B82Y 30/00* (2011.01)

(86) International application number:
**PCT/JP2005/015935**

(87) International publication number:
**WO 2006/025462 (09.03.2006 Gazette 2006/10)**

(54) **CARBON FIBER STRUCTURE**

CARBONFASERGEBILDE

STRUCTURE EN FIBRES DE CARBONE

(84) Designated Contracting States:
**AT BE BG CH CY CZ DE DK EE ES FI FR GB GR HU IE IS IT LI LT LU LV MC NL PL PT RO SE SI SK TR**

(30) Priority:
31.08.2004   JP 2004252601
30.11.2004   JP 2004347385
16.03.2005   JP 2005075437
08.06.2005   US 147742

(43) Date of publication of application:
**04.10.2006 Bulletin 2006/40**

(73) Proprietor: **Hodogaya Chemical Co., Ltd.**
**Tokyo 104-0028 (JP)**

(72) Inventors:
• **TSUKADA, Takayuki,**
**Bussan Nanotech Res. Inst. Inc.**
**Tokyo; 1000004 (JP)**
• **SHAN, Jiayi,**
**Bussan Nanotech Res. Inst. Inc.**
**Tokyo; 1000004 (JP)**

(74) Representative: **Giovannini, Francesca et al**
**Osha Liang**
**32, avenue de l'Opéra**
**75002 Paris (FR)**

(56) References cited:
WO-A-03/011755      WO-A-2004/025003
WO-A-2004/048263      WO-A-2004/099477
WO-A1-03/014441      WO-A1-03/040445
WO-A1-2004/044289      JP-A- 11 107 052
JP-A- 57 117 623      JP-A- 2002 266 170
JP-A- 2003 201 630      JP-A- 2004 119 386
US-A- 4 970 123

• **TANG T ET AL: "SYNTHESIS OF MULTIWALLED CARBON NANOTUBES BY CATALYTIC COMBUSTION OF POLYPROPYLENE" 25 February 2005 (2005-02-25), ANGEWANDTE CHEMIE. INTERNATIONAL EDITION, WILEY VCH VERLAG, WEINHEIM, PAGE(S) 1517 - 1520 , XP001235581 ISSN: 1433-7851 * figure 2b ***

**Description**

**TECHNICAL FIELD**

This invention relates to fine carbon fibrous structures, particularly structures that are composed of fine carbon fibers wherein each of the fibers is composed of tubular laminates of fine carbon sheets and has a varied configuration. The fibrous structures are suitable as additives to be added to solid materials, such as resin, ceramics, metal, etc., to improve physical properties, such as electric, mechanical, or thermal properties, of the solidmaterials, and also as additives to be added to liquid materials, such as fuels, lubricant oils, and etc., to improve physical properties, such as thermal property, of the liquid materials.

**BACKGROUND ART**

To date, carbon fibers have been used in various composite materials because of their good mechanical properties and high electric conductivity.

Recently, higher functionalities have come to be required for various materials. Additives which can improve physical properties, such as electric, mechanical, or thermal properties, of a matrix comprised of solid materials, such as resin, ceramics, and metal, without damaging the characteristics of the matrix have been sought after. Additionally, additives which can improve physical properties of liquids, such as fuels, oil, and lubricants have also been sought.

Hence, fine carbon fibers, such as carbon nano structures exemplified by the carbon nanotube (hereinafter, referred to also as "CNT"), have been attracting public attention in various fields.

The graphite layers that make up the carbon nano structures are materials normally comprised of regular arrays of six-membered rings whose structures can bring about specific electrical properties, as well as chemically, mechanically, and thermally stable properties. As long as such fine carbon fibers can retain such properties upon combining and dispersing into solid materials, including various resins, ceramics, metals, etc., or into liquid materials, including fuels, lubricant agents, etc., their usefulness as additives for improving material properties can be expected.

On the other hand, however, such fine carbon fibers unfortunately show an aggregate state even just after their synthesis. When these aggregates are used as-is, the fine carbon fibers would be poorly dispersed, and thus the product obtained would not benefit from the desirable properties of the nano structures. Accordingly, given a desired property such as electric conductivity for a matrix such as resin, it is necessary that the fine carbon fibers would be added in a large amount.

Patent Literature 1 discloses a resin composition comprising aggregates wherein each of the aggregate is composed of mutually entangled carbon fibrils having 3.5 - 70 nm in diameter, and wherein the aggregates possess a diameter in the range of 0.10 to 0.25 mm with a maximum diameter of not more than 0.25 mm. It is noted that the numeric data such as the maximum diameter, diameter, etc., for the carbon fibril aggregates are those measured prior to combining with a resin, as is clear from the descriptions in the examples and other parts of the Patent Literature 1.

Patent Literature 2 discloses a composite material where a carbon fibrous material is added to the matrix, the carbon fibrous material mainly comprising aggregates each of which is composed of carbon fibers having 50 - 5000 nm in diameter, the mutual contacting points among the carbon fibers being fixed with carbonized carbonaceous substance, and each aggregates having a size of 5 $\mu$m - 500 $\mu$m. In the Patent Literature 2, the numeric data such as the size of aggregate, etc. , are those measured prior to the combining into resin, too.

Using carbon fiber aggregates such as described above, it is expected that the dispersibility of carbon nano structures within a resin matrix will improve to a certain degree as compared to that of using bigger lumps of carbon fibers. The aggregates prepared by dispersing carbon fibrils under a certain shearing force, such as in a vibrating ball mill or the like according to the Patent Literature 1, however, have relatively high bulk densities. Thus, they do not fulfill the need for ideal additives that is capable of improving various characteristics, such as electric conductivity, of a matrix effectively at minuscule dosages.

The Patent Literature 2 discloses a carbon fibrous structure which is manufactured by heating carbon fibers in a state such that mutual contacting points among the carbon fibers are formed by compression molding after synthesis of the carbon fibers, and wherein fixing of fibers at the contacting points is done by carbonization of organic residues primarily attached to the surface of the carbon fibers, or carbonization of an organic compound additionally added as a binder. Since fixing of carbon fibers is performed by such a heat treatment after synthesis of the carbon fibers, the affixing forces at the contacting points are weak and do not result in good electrical properties of the carbon fibrous structures. When these carbon fibrous structures are added to a matrix such as a resin, the carbon fibers fixed at the contacting points are easily detached from each other, and the carbon fibrous structures are no longer maintained in the matrix. Therefore, it is not possible to construct preferable conductive paths in a matrix such that good electrical properties may be conferred on the matrix by a small additive amount of the fibrous structures. Furthermore, when a binder is added to promote fixing and carbonization at the contacting points, fibers in the obtained fibrous structures would have large diameters and inferior surface characteristics because the added binder is attached to the whole surface area of the fibers rather than to a limited area on the contacting points.

Patent Literature 1: Japanese patent No. 2862578
Patent Literature 2: JP-2004-119386A

WO-A1-03/014441 describes a fine carbon fiber, the main body of each fiber filament of the fiber having an outer diameter of about 1 to about 500 nm, wherein the fiber filament has a nodular portion which is formed of outwardly protruding carbon layers and wherein the ratio of the diameter of a fiber filament of the fiber as measured at a position at which a modular portion is present to the diameter of a fiber filament of the fiber as measured at a position at which no nodular portion is present is more than about 1.5 and not more than about 10.

## DISCLOSURE OF THE INVENTION

## PROBLEMS TO BE SOLVED BY THIS INVENTION

Therefore, this invention aims to provide carbon fibrous structures which can improve the physical properties, such as electric, mechanical, or thermal properties, of a matrix while maintaining other properties of the matrix, when added to the matrix at a sufficiently small amout.

## MEANS FOR SOLVING THE PROBLEMS

As a result of our diligent study for solving the above problems, we, the inventors, have found that the followings are effective at improving the various properties of a matrix, and finally accomplished the present invention:

To adapt carbon fibers having a diameter as small as possible;
To make a sparse structure of the carbon fibers where the fibers are mutually combined so that the fibers do not behave individually and which maintains their sparse state in the resin matrix; and
To adapt carbon fibers that are designed to have a minimum amount of defects. minimum amount of defects.

The present invention for solving the above mentioned problems is, therefore, a carbon fibrous structure which comprises a three dimensional network of carbon fibers, each of which having an outside diameter of 15 - 100 mn, wherein the carbon fibrous structure comprises a granular part, at which two or more carbon fibers are tied together such that the carton fibers extend outwardly therefrom, wherein the granular part is produced in a growth process of the carbon fibers, and wherein the size of granular part is 1. 3 or more of times larger wherein the size of granular part is 1.3 or more of times larger than the outside diameter of the carbon fibers, and wherein
the carbon fibrous structures may have an area-based circle-equivalent mean diameter of 50 - 100 $\mu$m and having a powder electric resistance determined under a pressed density of 0.8 g/cm$^3$ that is within the range of 0.001 to 0.010 $\Omega \cdot$cm.
In one embodiment, the carbon fibrous structures may have a bulk density of 0.0001 - 0.05g/cm$^3$
In another embodiment, the carbon fibrous structures may have an $I_D/I_G$ ratio determined by Raman spectroscopy of not more than 0.2.
In a further embodiment, the carbon fibrous structures may have a combustion initiation temperature in air of not less than 750 °C.
In a further embodiment, the carbon fibrous structures are produced using as carbon sources of at least two carbon compounds, which have different decomposition temperatures.

## EFFECTS OF THE INVENTION

According to the present invention, since the carbon fibrous structures are comprised of three dimensionally configured carbon fibers having ultrathin diameters and bound together by a granular part produced in a growth process of the carbon fibers so that the concerned carbon fibers extend outwardly from the granular part, the carbon fibrous structures can disperse promptly into a matrix such as a resin upon adding, while maintaining their bulky structure. Even when they are added at a small amount to a matrix, they can be distributed uniformly over the matrix. Therefore, with respect to the electric conductivity, it is possible to obtain good electric conductive paths throughout the matrix even at a small dosage. With respect to the mechanical and thermal properties, improvements can be expected in analogous fashions, since the carbon fibrous structures are distributed evenly as fillers over the matrix with only a small dosage.

## BRIEF DESCRIPTION OF THE DRAWINGS

[Fig. 1] is a SEM photo of an intermediate for the carbon fibrous structure according to the present invention;

[Fig. 2] is a TEM photo of an intermediate for the carbon fibrous structure according to the present invention;

[Fig. 3] is a SEM photo of a carbon fibrous structure according to the present invention;

[Fig. 4A} is a TEM photo of a carbon fibrous structure according to the present invention;

[Fig. 4B} is another TEM photo of a carbon fibrous structure according to the present invention;

[Fig. 5] is a SEM photo of a carbon fibrous structure according to the present invention;

[Fig. 6] is an X-ray diffraction chart of a carbon fibrous structure according to the present invention and an intermediate thereof;

[Fig. 7] is Raman spectra of a carbon fibrous structure according to one embodiment of the present invention and an intermediate thereof;

[Fig. 8] is an optical microphotograph of a composite material where a carbon fibrous structure according to the present invention is used; and

[Fig.9] is a schematic diagram illustrating a generation furnace used in an Example.

## BEST MODE FOR CARRYING OUT THE INVENTION

Now, the present invention will be described in detail with reference to some embodiments.

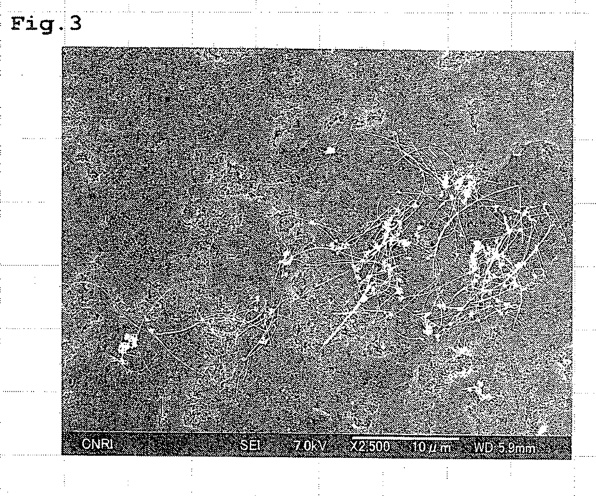

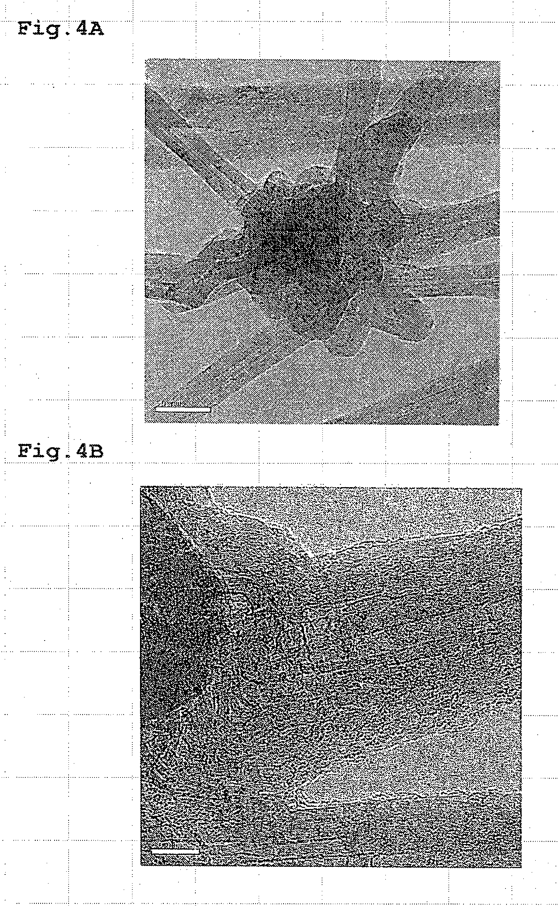

Carbon fibrous structure according to the present invention is, as shown in SEM photo of Fig. 3 and TEM photos of Fig. 4A and 4B, composed of carbon fibers each having an outside diameter of 15 - 100 nm, and a granular part at which the carbon fibers are tied together so that the concerned carbon fibers are externally elongated from the granular part.

The reason for restricting the outside diameter of the carbon fibers to a range of 15 nm to 100 nm is because when the outside diameter is less than 15 nm, the cross-sections of the carbon fibers do not have polygonal figures as described later. According to physical properties, the smaller the diameter of a fiber, the greater the number of carbon fibers will be for the same weight and/or the longer the length in the axial direction of the carbon fiber. This property would be followed by an enhanced electric conductivity. Thus, carbon fibrous structures having an outside diameter exceeding 100 nm are not preferred for use as modifiers or additives for a matrix such as a resin, etc. Particularly, it is more desirable for the outside diameter of the carbon fibers to be in the range of 20 - 70 nm. Carbon fibers that have a diameter within the preferable range and whose tubular graphene sheets are layered one by one in the direction that is orthogonal to the fiber axis, i.e., being of a multilayer type, can enj oy a high flexural rigidity and ample elasticity. In other words, such fibers would have a property of being easy to restore their original shape after undergoing any deformation. Therefore, these fibers tend to take a sparse structure in the matrix, even if the carbon fibrous structures have been compressed prior to being mixed into the matrix material.

Annealing at a temperature of not less than 2400 °C causes the carbon fibers to have polygonal cross-sections. Additionally, annealing lessens the spacing between the layered graphene sheets and increases the true density of the carbon fiber from 1.89 g/cm$^3$ to 2.1 g/cm$^3$. As a result, the carbon fibers become denser and have fewer defects in both the stacking direction and the surface direction of the graphene sheets that make up the carbon fiber, and their flexural rigidity (EI) and dispersibility in a resin can also be enhanced and improved.

Additionally, it is preferable that the outside diameter of a fine carbon fiber undergoes a change along the axial direction of the fiber. In the case that the outside diameter of the carbon fiber is not constant, but changes along the length of the fiber, it would be expected that some anchor effect may be provided to the carbon fiber at the interface with the matrix material, and thus migration of the carbon fibrous structure in the matrix can be restrained, leading to improved dispersion stability.

Thus, in a carbon fibrous structure according to the present invention, fine carbon fibers having a predetermined outside diameter configures the three dimensional network and are bound together by a granular part produced in a growth process of the carbon fibers so that the carbon fibers are externally elongated from the granular part. Since multiple fine carbon fibers are not only entangled with each other, but fused together at the granular part , the carbon fibers will not disperse as single fibers, but will be dispersed as bulky carbon fibrous structures when added to a matrix such as a resin. Since the fine carbon fibers are bound together by a granular part produced in the growth process of the carbon fibers in a carbon fibrous structure according to the present invention, the carbon fibrous structure itself can enjoy superior properties such as electric property. For instance, when measuring electrical resistance under a certain pressed density, carbon fibrous structures according to the present invention have an extremely low resistivity, as compared with that of a simple aggregate of the fine carbon fibers and that of the carbon fibrous structures in which the fine carbon fibers are fixed at contacting points with a carbonaceous material or carbonized substance therefrom after the synthesis of the carbon fibers. Thus, when carbon fibrous structures according to the present invention are added and distributed in a matrix, they can form good conductive paths within the matrix.

Since the granular part is produced in the growth process of the carbon fibers as mentioned above, the carbon - carbon bonds in the granular part are well developed. Further, the granular part appears to include mixed state of sp2- and sp3-bonds, although it is not clear accurately. After the synthesis process (in the "intermediate" or "first intermediate" defined hereinafter), the granular part and the fibrous parts are continuous mutually by virtue of a structure comprising patch-like sheets of carbon atoms laminated together. Further, after the high temperature treatment, at least a part of graphene layers constituting the granular part is continued on graphene layers constituting the fine carbon fibers elongated externally from the granular part, as shown in Figs. 4A and 4B. In the carbon fibrous structure according to the present invention, as symbolized by such a fact that the graphene layers constituting the granular part is continued on the graphene layers constituting the fine carbon fibers, the granular part and the fine carbon fibers are linked together (at least in a part) by carbon crystalline structural bonds. Thus, strong couplings between the granular part and each fine carbon fiber are produced.

With respect to the carbon fibers, the condition of being "extended outwardly" from the granular part used herein means principally that the carbon fibers and granular part are linked together by carbon crystalline structural bonds as mentioned above, but does not means that they are apparently combined together by any additional binding agent (involving carbonaceous ones).

As traces of the fact that the granular part is produced in the growth process of the carbon fibers as mentioned above, the granular part has at least one catalyst particle or void therein, the void being formed due to the volatilization and elimination of the catalyst particle during the heating process after the generation process. The void (or catalyst particle) is essentially independent from hollow parts which are formed in individual fine carbon fibers which are extended outwardly from the granular part (although, a few voids which happened to be associate with the hollow part may be observed).

Although the number of the catalyst particles or voids is not particularly limited, it may be about 1 - 1000 a granular particle, more preferably, about 3 - 500 a granular particle. When the granular part is formed under the presence of catalyst particles the number of which is within the range mentioned above, the granular part formed can have a desirable size as mentioned later.

The per-unit size of the catalyst particle or void existing in the granular particle may be, for example, 1 - 100 nm, preferably, 2 - 40 nm, and more preferably, 3 - 15 nm.

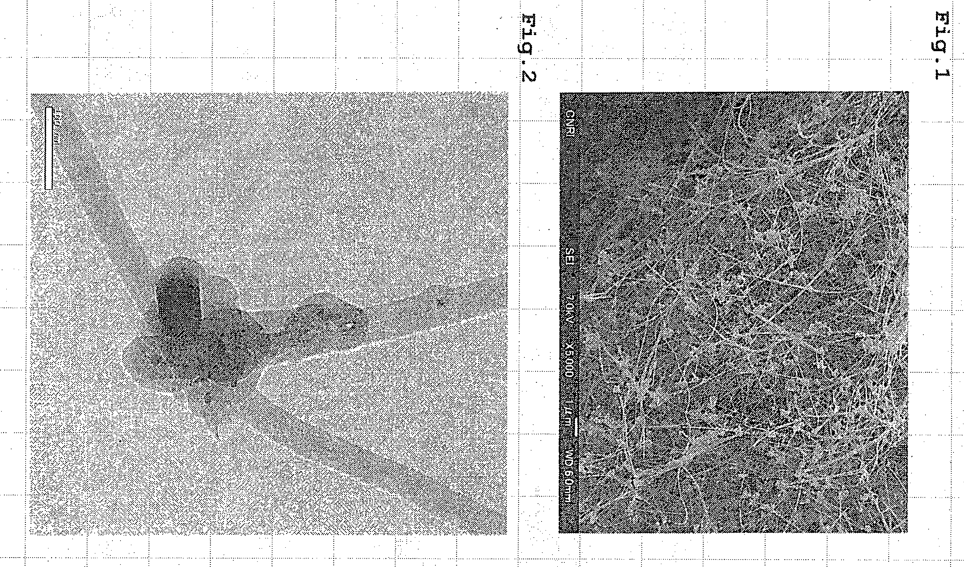

Furthermore, it is preferable that the diameter of the granular part is larger than the outside diameter of the carbon fibers as shown in Fig.2. Concretely, for example, the diameter of granular part is 1.3 - 250 times larger than the outside diameter of the carbon fibers, preferably 1.5 - 100 times, and more preferably, 2.0 - 25 times larger, on average. When the granular part, which is the binding site of the carbon fibers, has a much larger particle diameter, that is, 1.3 times or more larger than the outer diameter of the carbon fibers, the carbon fibers that are externally elongated from the granular part have stronger binding force, and thus, even when the carbon fibrous structures are exposed to a relatively high shear stress during combining with a matrix such as resin, they can be dispersed as maintaining its three-dimensional carbon fibrous structures into the matrix. When the granular part has an extremely larger particle diameter, that is, exceeding 250 times of the outer diameter of the carbon fibers, the undesirable possibility that the fibrous characteristics of the carbon fibrous structure are lost will arise. Therefore, the carbon fibrous structure will be not suitable for an additive or compounding agent to a various matrix, and thus it is not desirable. The "particle diameter of the granular part" used herein is the value which is measured by assuming that the granular part, which is the binding site for the mutual carbon fibers, is one spherical particle. Although the concrete value for the particle diameter of the granular part will be depended on the size of the carbon fibrous structure and the outer diameter of the fine carbon fiber in the carbon fibrous structure, for example, it may be 20 - 5000 nm, more preferably, 25 - 2000 nm, and most preferably, 30 - 500 nm, on average.

Furthermore, the granular part may be roughly globular in shape because the part is produced in the growth process of the carbon fibers as mentioned above. On average, the degree of roundness thereof may lay in the range of from 0.2 to <1, preferably, 0.5 to 0.99, and more preferably, 0.7 to 0.98.

Additionally, the binding of the carbon fibers at the granular part is very tight as compared with, for example, that in the structure in which mutual contacting points among the carbon fibers are fixed with carbonaceous material or carbonized substance therefrom. It is also because the granular part is produced in the growth process of the carbon fibers as mentioned above. Even under such a condition as to bring about breakages in the carbon fibers of the carbon fibrous structure, the granular part (the binding site) is maintained stably. Specifically, for example, when the carbon fibrous structures are dispersed in a liquid medium and then subjected to ultrasonic treatment with a selected wavelength and a constant power under a load condition by which the average length of the carbon fibers is reduced to about half of its initial value as shown in the Examples described later, the changing rate in the mean diameter of the granular parts is not more than 10%, preferably, not more than 5%, thus, the granular parts, i.e., the binding sites of fibers are maintained stably.

In carbon fibrous structures according to the present invention, the carbon fibrous structure has an area-based circle-equivalent mean diameter of 50 - 100 $\mu$m, preferably of 60 - 90 $\mu$m. The "area-based" circle-equivalent mean diameter" used herein is the value which is determined by taking a picture for the outside shapes of the carbon fibrous structures with a suitable electron microscope, etc., tracing the contours of the respective carbon fibrous structures in the obtained picture using a suitable image analysis software, e.g., WinRoof™ (Mitani Corp.), and measuring the area within each individual contour, calculating the circle-equivalent mean diameter of each individual carbon fibrous structure, and then, averaging the calculated data.

Although it is not to be applied in all cases because the circle-equivalent mean diameter may be affected by the kind of matrix material, e.g. a resin, to be complexed, the circle-equivalent mean diameter may become a factor by which the maximum length of a carbon fibrous structure upon combining into a matrix such as a resin is determined. In general, when the circle-equivalent mean diameter is not more than 50 $\mu$m, the electrical conductivity of the obtained composite may not be expected to reach a sufficient level, while when it exceeds 100 $\mu$m, an undesirable increase in viscosity may be expected to happen upon kneading of the carbon fibrous structures in the matrix. The increase in viscosity may be followed by failure of dispersion or may result in an inferior moldability.

As mentioned above, the carbon fibrous structure according to the present invention has the configuration where the fine carbon fibers existing in three dimensional network state are bound together by the granular part(s) so that the carbon fibers are externally elongated from the granular part (s). When two or more granular parts are present in a carbon fibrous structure, wherein each granular part binds the fibers so as to form the three dimensional network, the mean distance between adjacent granular parts may be, for example, 0.5 - 300 $\mu$m, preferably, 0.5 - 100 $\mu$m, and more preferably, 1 - 50 $\mu$m. The distance between adjacent granular parts used herein is determined by measuring distance from the center of a granular part to the center of another granular part which is adjacent the former granular part. When the mean distance between the granular parts is not more than 0.5 $\mu$m, a configuration where the carbon fibers form an inadequately developed three dimensional network may be obtained. Therefore, it may become difficult to form good electric conductive paths when the carbon fiber structures each having such an inadequately developed three dimensional network are added and dispersed to a matrix such as a resin. Meanwhile, when the mean distance exceeds 300 $\mu$m, an undesirable increase in viscosity may be expected to happen upon adding and dispersing the carbon fibrous structures in the matrix. The increase in viscosity may result in an inferior dispersibility. Furthermore, the carbon fibrous structure according to the present invention may exhibit a bulky, loose form in which the carbon fibers are sparsely dispersed, because the carbon fibrous structure is comprised of carbon fibers that are configured as a three dimensional network and are bound together by a granular part so that the carbon fibers are externally elongated from the granular part as mentioned above. It is desirable that the bulk density thereof is in the range of 0.0001 - 0.05 g/cm$^3$, more preferably, 0.001 - 0.02 g/cm$^3$. When the bulk density exceeds 0.05 g/cm$^3$, the improvement of the physical properties in a matrix such as a resin would become difficult with a small dosage. Furthermore, a carbon fibrous structure according to the present invention can enjoy good electric properties in itself, since the carbon fibers in the structure are bound together by a granular part produced in the growth process of the carbon fibers as mentioned above. For instance, it is desirable that a carbon fibrous structure according to the present invention has a powder electric resistance determined under a certain pressed density, 0.8 g/cm$^3$, of 0.001 to 0.010 $\Omega$ · cm. If the particle's resistance exceeds 0.02 $\Omega$ · cm, it may become difficult to form good electrically conductive paths when the structure is added to a matrix such as a resin.

In order to enhance the strength and electric conductivity of a carbon fibrous structure according to the present invention, it is desirable that the graphene sheets that make up the carbon fibers have a small number of defects, and more specifically, for example, the $I_D/I_G$ ratio of the carbon fiber determined by Raman spectroscopy is not more than 0.2, more preferably, not more than 0.1. Incidentally, in Raman spectroscopic analysis, with respect to a large single crystal graphite, only the peak (G band) at 1580 cm$^{-1}$ appears. When the crystals are of finite ultrafine sizes or have any lattice defects, the peak (D band) at 1360 cm$^{-1}$ can appear. Therefore, when the intensity ratio ($R=I_{1360}/I_{1580}=I_D/I_G$) of the D band and the G band is below the selected range as mentioned above, it is possible to say that there is little defect in graphene sheets.

Furthermore, it is desirable that the carbon fibrous structure according to the present invention has a combustion initiation temperature in air of not less than 750 °C, preferably, 800 °C - 900 °C. Such a high thermal stability would be brought about by the above mentioned facts that it has little defects and that the carbon fibers have a predetermined outside diameter.

A carbon fibrous structure according to the present invention having the above described, desirable configuration may be prepared as follows, although it is not limited thereto.

Basically, an organic compound such as a hydrocarbon is chemical thermally decomposed through the CVD process in the presence of ultrafine particles of a transition metal as a catalyst in order to obtain a fibrous structure (hereinafter referred to as an "intermediate"), and then the intermediate thus obtained undergoes a high temperature heating treatment.

As a raw material organic compound, hydrocarbons such as benzene, toluene, xylene; carbon monoxide (CO); and alcohols such as ethanol may be used. It is preferable, but not limited, to use as carbon sources at least two carbon compounds which have different decomposition temperatures. Incidentally, the words "at least two carbon compounds" used herein not only include two or more kinds of raw materials, but also include one kind of raw material that can undergo a reaction, such as hydrodealkylation of toluene or xylene, during the course of synthesis of the fibrous structure such that in the subsequent thermal decomposition procedure it can function as at least two kinds of carbon compounds having different decomposition temperatures.

When as the carbon sources at least two kinds of carbon compounds are provided in the thermal decomposition reaction system, the decomposition temperatures of individual carbon compounds may be varied not only by the kinds of the carbon compounds, but also by the gas partial pressures of individual carbon compounds, or molar ratio between the compounds. Therefore, as the carbon compounds, a relatively large number of combinations can be used by adjusting the composition ratio of two or more carbon compounds in the raw gas.

For example, the carbon fibrous structure according to the present invention can be prepared by using two or more carbon compounds in combination, while adjusting the gas partial pressures of the carbon compounds so that each compound performs mutually different decomposition temperature within a selected thermal decomposition reaction temperature range, and/or adjusting the residence time for the carbon compounds in the selected temperature region, wherein the carbon compounds to be selected are selected from the group consisting of alkanes or cycloalkanes such as methane, ethane, propanes, butanes, pentanes, hexanes, cyclopropane, cycrohexane, particularly, alkanes having 1 -7 carbon atoms; alkenes or cycloolefin such as ethylene, propylene, butylenes, pentenes, heptenes, cyclopentene, particularly, alkenes having 1 - 7 carbon atoms; alkynes such as acetylene, propyne, particularly, alkynes having 1 - 7 carbon atoms; aromatic or heteroaromatic hydorocarbons such as benzene, toluene, styrene, xylene, naphthalene, methyl naphtalene, indene, phenanthrene, particularly, aromatic or heteroaromatic hydorocarbons having 6 -18 carbon atoms; alcohols such as methanol, ethanol, particularly, alcohols having 1 -7 carbon atoms; and other carbon compounds involving such as carbon monoxide, ketones, ethers. Further, to optimize the mixing ratio can contribute to the efficiency of the preparation.

When a combination of methane and benzene is utilized among such combinations of two or more carbon compounds, it is desirable that the molar ratio of methane/benzene is >1 - 600, preferably, 1.1 - 200, and more preferably 3 -100. The ratio is for the gas composition ratio at the inlet of the reaction furnace. For instance, when as one of carbon sources toluene is used, in consideration of the matter that 100% of the toluene decomposes into methane and benzene in proportions of 1:1 in the reaction furnace, onlyadeficiencyofmethanemaybe supplied separately. For example, in the case of adjusting the methane / benzene molar ratio to 3, 2 mol methane may be added to 1 mol toluene. As the methane to be added to the toluene, it is possible to use the methane which is contained as an unreacted form in the exhaust gas discharged from the reaction furnace, as well as a fresh methane specially supplied. Using the composition ratio within such a range, it is possible to obtain the carbon fibrous structure in which both the carbon fiber parts and granular parts are efficiently developed.

Inert gases such as argon, helium, xenon; and hydrogen may be used as an atmosphere gas.

A mixture of transition metal such as iron, cobalt, molybdenum, or transition metal compounds such as ferrocene, metal acetate; and sulfur or a sulfur compound such as thiophene, ferric sulfide; may be used as a catalyst.

The intermediate may be synthesized using a CVD process with hydrocarbon or etc., which has been conventionally used in the art. The steps may comprise gasifying a mixture of hydrocarbon and a catalyst as a raw material, supplying the gasified mixture into a reaction furnace along with a carrier gas such as hydrogen gas, etc., and undergoing thermal decomposition at a temperature in the range of 800 °C - 1300 °C. By following such synthesis procedures, the product obtained is an aggregate, which is of several to several tens of centimeters in size and which is composed of plural carbon fibrous structures (intermediates), each of which has a three dimensional configuration where fibers having 15 - 100 nm in outside diameter are bound together by a granular part that has grown around the catalyst particle as the nucleus.

The thermal decomposition reaction of the hydrocarbon raw material mainly occurs on the surface of the catalyst particles or on growing surface of granular parts that have grown around the catalyst particles as the nucleus, and the fibrous growth of carbon may be achieved when the recrystallization of the carbons generated by the decomposition progresses in a constant direction. When obtaining carbon fibrous structures according to the present invention, however, the balance between the thermal decomposition rate and the carbon fiber growth rate is intentionally varied. Namely, for instance, as mentioned above, to use as carbon sources at least two kinds of carbon compounds having different decomposition temperatures may allow the carbonaceous material to grow three dimensionally around the granular part as a centre, rather than in one dimensional direction. The three dimensional growth of the carbon fibers depends not only on the balance between the thermal decomposition rate and the growing rate, but also on the selectivity of the crystal face of the catalyst particle, residence time in the reaction furnace, temperature distribution in the furnace, etc. The balance between the decomposition rate and the growing rate is affected not only by the kinds of carbon sources mentioned above, but also by reaction temperatures, and gas temperatures, etc. Generally, when the growing rate is faster than the decomposition rate, the carbon material tends to grow into fibers, whereas when the thermal decomposition rate is faster than the growing rate, the carbon material tends to grow in peripheral directions of the catalyst particle.

Accordingly, by changing the balance between the thermal decomposition rate and the growing rate intentionally, it is possible to control the growth of carbon material to occur in multi-direction rather than in single direction, and to produce three dimensional structures according to the present invention.

In order to form the above mentioned three-dimensional configuration, where the fibers are bound together by a granular part, with ease, it is desirable to optimize the compositions such as the catalyst used, the residence time in the reaction furnace, the reaction temperature and the gas temperature.

With respect to the method for preparing the carbon fibrous structure according to the present invention with efficiency, as another approach to the aforementioned one that two or more carbon compounds which have mutually different decomposition temperature are used in an appropriate mixing ratio, there is an approach that the raw material gas supplied into the reaction furnace from a supply port is forced to form a turbulent flow in proximity to the supply port. The "turbulent flow" used herein means a furiously irregular flow, such as flow with vortexes.

In the reaction furnace, immediately after the raw material gas is supplied into the reaction furnace from the supply port, metal catalyst fine particles are produced by the decomposition of the transition metal compound as the catalyst involved in the raw material gas. The production of the fine particles is carried out through the following steps. Namely, at first, the transition metal compound is decomposed to make metal atoms, then, plural number of, for example, about one hundred of metal atoms come into collisions with each other to create a cluster. At the created cluster state, it can not function as a catalyst for the fine carbon fiber. Then, the clusters further are aggregated by collisions with each other to grow into a metal crystalline particle of about 3 - 10 nm in size, and which particle comes into use as the metal catalyst fine particle for producing the fine carbon fiber.

During the catalyst formation process as mentioned above, if the vortex flows belonging to the furiously turbulent flow are present, it is possible that the collisions of carbon atoms or collisions of clusters become more vigorously as compared with the collisions only due to the Brownian movement of atoms or collisions, and thus the collision frequency per unit time is enhanced so that the metal catalyst fine particles are produced within a shorter time and with higher efficiency. Further, Since concentration, temperature, and etc. are homogenized by the force of vortex flow, the obtained metal catalyst fine particles become uniform in size. Additionally, during the process of producing metal catalyst fine particles, a metal catalyst particles' aggregate in which numerous metal crystalline particles was aggregated by vigorous collisions with the force of vortex flows can be also formed. Since the metal catalyst particles are rapidly produced as mentioned above, the decomposition of carbon compound can be accelerated so that an ample amount of carbonaceous material can be provided. Whereby, the fine carbon fibers grow up in a radial pattern by taking individual metal catalyst particles in the aggregate as nuclei. When the thermal decomposition rate of a part of carbon compounds is faster than the growing rate of the carbon material as previously described, the carbon material may also grow in the circumferential direction so as to form the granular part around the aggregate, and thus the carbon fiber structure of the desired three dimensional configuration may be obtained with efficiency.

Incidentally, it may be also considered that there is a possibility that some of the metal catalyst fine particles in the aggregate are ones that have a lower activity than the other particles or ones that are deactivated on the reaction. If non-fibrous or very short fibrous carbon material layers grown by such catalyst fine particles before or after the catalyst fine particles aggregate are present at the circumferential area of the aggregate, the granular part of the carbon fiber structure according to the present invention may be formed.

The concrete means for creating the turbulence to the raw material gas flow near the supply port for the raw material gas is not particularly limited. For example, it is adaptable to provide some type of collision member at a position where the raw material gas flow introduced from the supply port can be interfered by the collision section. The shape of the collision section is not particularly limited, as far as an adequate turbulent flow can be formed in the reaction furnace by the vortex flow which is created at the collision section as the starting point. For example, embodiments where various shapes of baffles, paddles, tapered tubes, umbrella shaped elements, and etc., are used singly or in varying combinations and located at one or more positions may be adaptable.

The intermediate, obtained by heating the mixture of the catalyst and hydrocarbon at a constant temperature in the range of 800 °C - 1300°C, has a structure that resembles sheets of carbon atoms laminated together, (and being still in half-raw, or incomplete condition). When analyzed with Raman spectroscopy, the D band of the intermediate is very large and many defects are observed. Further, the obtained intermediate is associated with unreacted raw materials, nonfibrous carbon, tar moiety, and catalyst metal.

Therefore, the intermediate is subjected to a high temperature heat treatment using a proper method in order to remove such residues from the intermediate and to produce the intended carbon fibrous structure with few defects.

For instance, the intermediate may be heated at 800 - 1200 °C to remove the unreacted raw material and volatile flux such as the tar moiety, and thereafter annealed at a high temperature of 2400 - 3000 °C to produce the intended structure and, concurrently, to vaporize the catalyst metal, which is included in the fibers, to remove it from the fibers. In this process, it is possible to add a small amount of a reducing gas and carbon monoxide into the inert gas atmosphere to protect the carbon structures.

By annealing the intermediate at a temperature of 2400 - 3000 °C, the patch-like sheets of carbon atoms are rearranged to associate mutually and then formmultiple graphene sheet-like layers.

After or before such a high temperature heat treatment, the aggregates may be subjected to crushing in order to obtain carbon fibrous structures, each having an area-based circle-equivalent mean diameter of several centimeters. Then, the obtained carbon fibrous structures may be subjected to pulverization in order to obtain the carbon fibrous structures having an area-based circle-equivalent mean diameter of 50 - 100 $\mu$m. It is also possible to perform the pulverization directly without crushing. On the other hand, the initial aggregates involving plural carbon fibrous structures according to the present invention may also be granulated for adjusting shape, size, or bulk density to one's suitable for using a particular application. More preferably, in order to utilize effectively the above structure formed from the reaction, the annealing would be performed in a state such that the bulk density is low (the state that the fibers are extended as much as they can and the voidage is sufficiently large). Such a state may contribute to improved electric conductivity of a resin matrix.

The carbon fibrous structures according to the present invention may have the following properties:

A) a low bulk density;
B) a good dispersibility in a matrix such as resin;
C) a high electrical conductivity;
D) a high heat conductivity;
E) a good slidability;
F) a good chemical stability;
G) a high thermal stability; and etc.

Thus, the carbon fiber structure of the invention can be used in a wide range of applications, for example, as a filler for composite material to be added to a solid material such as resins, ceramics, metals, etc. , or as an additive to a liquid material such as, fuel, lubricating oil, etc.

The following are examples of various applications according to functionalities. The present invention, however, is limited to these examples.

1) One which utilizes electric conductivity

For example, by combining carbon fibers of the invention with a resin, the resultant conductive resin and conductive resin molded body may be suitably used as wrapping material, gasket, container, resistance body, conductive fiber, electric wire, adhesive, ink, paint, and etc. Similar effects can be expected from composite materials in which the carbon fibers are added to an inorganic material, particularly, ceramic, metal, and etc., in addition to the above mentioned composite with a resin.

2) One which utilizes heat conductivity

It is possible to add the carbon fibers to fuels to improve heat conduction, in addition to similar applications as above wherein electric conductivity is utilized.

3) One which utilizes electromagnetic wave shielding ability

By combining carbon fibers with a resin, the resulting resin can be suitably used as electromagnetic wave shielding paint as well as electromagnetic wave shielding material for molding.

4) One which utilizes physical characteristics

By combining them into a matrix such as a resin or a metal to improve the sliding ability of the matrix, which can then be used for rollers, brake parts, tires, bearings, lubricating oils, cogwheels, pantographs, and etc.

Also, by taking advantage of their light-weight and toughness, they can be used in wires, bodies of consumer electronics, cars or airplanes, housing of machines, and etc.

Additionally, it is possible to use them as a substitute for conventional carbon fibers or beads, as well as use in polar materials of batteries, switches, vibration dampers and etc.

5) One which utilizes thermal stability

In order to improve the safety of flammable liquids such as fuels, lubricating oils, etc., during storage or transportation, the carbon fibers may be added to the flammable liquids.

## EXAMPLES

Hereinafter, this invention will be illustrated in detail by practical examples. However, the invention is not limited to the following examples.

The respective physical properties illustrated later are measured by the following protocols.

<Area based circle-equivalent mean diameter>

First, a photograph of carbon fibrous structures was taken with SEM. On the taken SEM photo, only carbon fibrous structures with a clear contour were taken as objects to be measured, and broken ones with unclear contours were omitted. Using all carbon fibrous structures that can be taken as objects in one single field of view (approximately, 60 - 80 pieces), about 200 pieces in total were measured with three fields of views. Contours of the individual carbon fibrous structures were traced using the image analysis software, WinRoof™ (trade name, marketed by Mitani Corp.), and area within each individual contour was measured, circle-equivalent mean diameter of each individual carbon fibrous structure was calculated, and then, the calculated data were averaged to determine the area based circle-equivalent mean diameter.

<Measurement of Bulk density>

1 g of powder was placed into a 70 mm caliber transparent cylinder equipped with a distribution plate, then air supply at 0.1 Mpa of pressure, and 1.3 liter in capacity was applied from the lower side of the distribution plate in order to blow off the powder and thereafter allowed the powder to settle naturally. After the fifth air blowing, the height of the settled powder layer was measured. Any 6 points were adopted as the measuring points, and the average of the 6 points was calculated in order to determine the bulk density.

<Raman spectroscopic analysis>

The Raman spectroscopic analysis was performed with LabRam 800 manufactured by HORIBA JOBIN YVON, S.A.S., using 514 nm argon laser.

<TG combustion temperature>

Combustion behavior was determined using TG-DTA manufactured by MAX SCIENCE CO. LTD., at air flow rate of 0.1 liter/minute and heating rate of 10 °C/minute. When burning, TG indicates a quantity reduction and DTA indicates an exothermic peak. Thus, the top position of the exothermic peak was defined as the combustion initiation temperature.

<X ray diffraction>

Using the powder X ray diffraction equipment (JDX3532, manufactured by JEOL Ltd.), carbon fiber structures after annealing processing were determined. K$\alpha$ ray which was generated with Cu tube at 40 kV, 30 mV was used, and the measurement of the spacing was performed in accordance with the method defined by The Japan Society for the Promotion of Science (JSPS), described in "Latest Experimental Technique For Carbon Materials (Analysis Part) ", Edited by Carbon Society of Japan), and as the internal standard silicon powder was used. The related parts of this literature are incorporated herein by reference.

1 g of CNT powder was scaled, and then press-loaded into a resinous die (inner dimensions: 40 L, 10W, 80 H mm), and the displacement and load were read out. A constant current was applied to the powder by the four-terminal method, and in this condition the voltage was measured. After measuring the voltage until the density came to 0.9g/cm$^3$, the applied pressure was released and the density after decompression was measured. Measurements taken when the powder was compressed to 0.5, 0.8 or 0.9 g/cm$^3$ were adopted as the particle's resistance.

<Mean diameter and roundness of the granular part, and ratio of the granular part to the fine carbon fiber>

First, a photograph of the carbon fibrous structures was taken with SEM in an analogous fashion as in the measurement of area based circle-equivalent mean diameter. On the taken SEM photo, only carbon fibrous structures with a clear contour were taken as objects to be measured, and broken ones with unclear contours were omitted. Using all carbon fibrous structures that can be taken as objects in one single field of view (approximately, 60 - 80 pieces), about 200 pieces in total were measured with three fields of views. On the carbon fibrous structures to be measured, assuming each individual granular part which is the binding point of carbon fibers to be a particle, contours of the individual granular parts were traced using the image analysis software, WinRoof ™ (trade name, marketed by Mitani Corp.), and area within each individual contour was measured, circle-equivalent mean diameter of each individual granular part was calculated, and then, the calculated data were averaged to determine the area based circle-equivalent mean diameter. Roundness (R) is determined by inputting value of the area(A) within each individual contour computed by the above and a measured value of each individual contour's length (L) to the following equation to calculate the roundness of each individual granular part, and then, averaging the calculated data.

$$R = A * 4\pi / L^2$$

Further, the outer diameter of the fine carbon fibers in the individual carbon fibrous structures to be measured are determined, and then, from the outer diameter determined and the circle-equivalent mean diameter of the granular part calculated as above, the ratio of circle-equivalent mean diameter to the outer diameter of the fine carbon fiber is calculated for each individual carbon fibrous structure, and then the data obtained are averaged.

<Mean distance between granular parts>

First, a photograph of the carbon fibrous structures was taken with SEM in an analogous fashion as in the measurement of area based circle-equivalent mean diameter. On the taken SEM photo, only carbon fibrous structures with a clear contour were taken as objects to be measured, and broken ones with unclear contours were omitted. Using all carbon fibrous structures that can be taken as objects in one single field of view (approximately, 60 - 80 pieces), about 200 pieces in total were measured with three fields of views. On the carbon fibrous structures to be measured, all places where the granular parts are mutually linked with a fine carbon fiber are found out. Then, at the respective places, the distance between the adjacent granular parts which are mutually linked with the fine carbon fiber (the length of the fine carbon fiber including the center of a granular part at one end to the center of another granular part at another end) is measured, and then the data obtained are averaged.

<Destruction test for carbon fibrous structure>

To 100ml of toluene in a lidded vial, the carbon fiber structure is added at a ratio of 30 $\mu$l/ml in order to prepare the dispersion liquid sample of the carbon fibrous structure. To the dispersion liquid sample of the carbon fibrous structure thus prepared, Ultrasound is applied using a ultrasonic cleaner (manufactured by SND Co., Ltd., Trade Name: USK-3) of which generated frequency is 38 kHz and power is 150 w, and the change of the carbon fibrous structure in the dispersion liquid is observed in the course of time aging.

First, 30 minutes after the application of ultrasound is stated, a 2 ml constant volume aliquot of the dispersion sample is pipetted, and the photo of the carbon fibrous structures in the aliquot is taken with SEM. On the obtained SEM photo, 200 pieces of fine carbon fibers in the carbon fibrous structures (fine carbon fibers at least one end of which is linked to the granular part) are selected randomly, then the length of the each individual selected fine carbon fibers is measured, and mean length $D_{50}$ is calculated. The mean length calculated is taken as the initial average fiber length.

Meanwhile, on the obtained SEM photo, 200 pieces of granular parts which each are the binding point of carbon fibers in the carbon fibrous structures are selected randomly. Assuming each individual selected granular part to be a particle, contours of the individual granular parts were traced using the image analysis software, WinRoof™ (trade name, marketed by Mitani Corp.), and area within each individual contour was measured, circle-equivalent mean diameter of each individual granular part was calculated, and then, $D_{50}$ mean value thereof is calculated. The $D_{50}$ mean value calculated is taken as the initial average diameter of the granular parts.

Thereafter, according to the same procedure, a 2 ml constant volume aliquot of the dispersion sample is pipetted every constant periods, and the photo of the carbon fibrous structures in the each individual aliquot is taken with SEM, and the mean length $D_{50}$ of the fine carbon fibers in the carbon fibrous structure and the mean diameter $D_{50}$ of the granular part in the carbon fibrous structure are calculated individually.

At the time when the mean length $D_{50}$ of the fine carbon fibers comes to be about half the initial average fiber length (in the following Examples, 500 minutes after the application of ultrasound is stated.), the mean diameter $D_{50}$ of the granular part is compared with the initial average diameter of the granular parts in order to obtain the rate of variability (%) thereof.

(Example 1)

By the CVD process, carbon fibrous structures were synthesized using toluene as the raw material.

The synthesis was carried out in the presence of a mixture of ferrocene and thiophene as the catalyst, and under the reducing atmosphere of hydrogen gas. Toluene and the catalyst were heated to 380 °C along with the hydrogen gas, and then they were supplied to the generation furnace, and underwent thermal decomposition at 1250 °C in order to obtain the carbon fibrous structures (first intermediate).

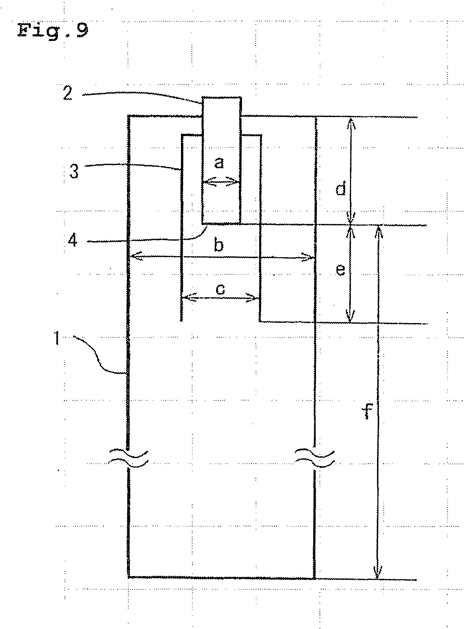

The generation furnace used for the carbon fibrous structures (first intermediate) is illustrated schematically in Fig. 9. As shown in Fig. 9, the generation furnace 1 was equipped at the upper part thereof with a inlet nozzle 2 for introducing the raw material mixture gas comprising toluene, catalyst and hydrogen gas as aforementioned into the generation furnace 1. Further, at the outside of the inlet nozzle 2, a cylindrical-shaped collision member 3 was provided. The collision member 3 was set to be able to interfere in the raw material gas flow introduced from the raw material supply port 4 located at the lower end of the inlet nozzle 2. In the generation furnace 1 used in this Example, given that the inner diameter of the inlet nozzle 2, the inner diameter of the generation furnace 1, the inner diameter of the cylindrical-shaped collision member 3, the distance from the upper end of the generation furnace 1 to the raw material mixture gas supply port 4, the distance from the raw material mixture gas supply port 4 to the lower end of the collision member 3, and the distance from the raw material mixture gas supply port 4 to the lower end of the generation furnace 1 were "a", "b", "c", "d", "e", and "f", respectively, the ratio among the above dimensions was set as a:b:c:d:e:f = 1.0:3.6:1.8:3.2:2.0:21.0. The raw material gas supplying rate to the generation furnace was 1850 NL/min., and the pressure was 1.03 atms. The synthesized first intermediate was baked at 900 °C in nitrogen gas in order to remove hydrocarbons such as tar and to obtain a second intermediate. The R value of the second intermediate measured by the Raman spectroscopic analysis was found to be 0.98. Sample for electron microscopes was prepared by dispersing the first intermediate into toluene. Figs 1 and 2 show SEM photo and TEM photo of the sample, respectively.

Further, the second intermediate underwent a high temperature heat treatment at 2600 °C. The obtained aggregates of the carbon fibrous structures underwent pulverization using an air flow pulverizer in order to produce the carbon fibrous structures according to the present invention. A sample for electron microscopes was prepared by dispersing ultrasonically the obtained carbon fibrous structures into toluene. Figs 3, and 4 show SEM photo and TEM photos of the sample, respectively.

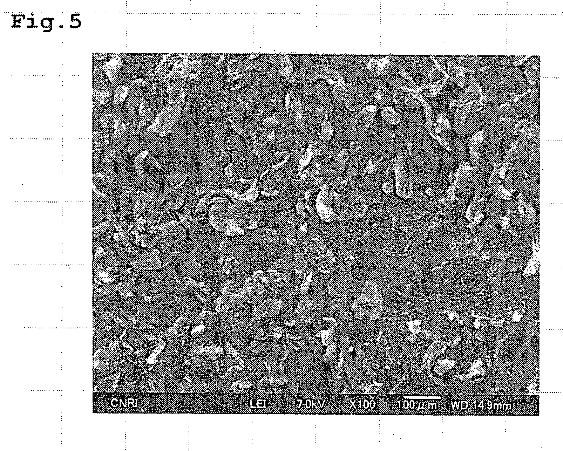

Fig. 5 shows SEM photo of the obtained carbon fibrous structures as mounted on a sample holder for electronmicroscope, and Table 1 shows the particle distribution of obtained carbon fibrous structures.

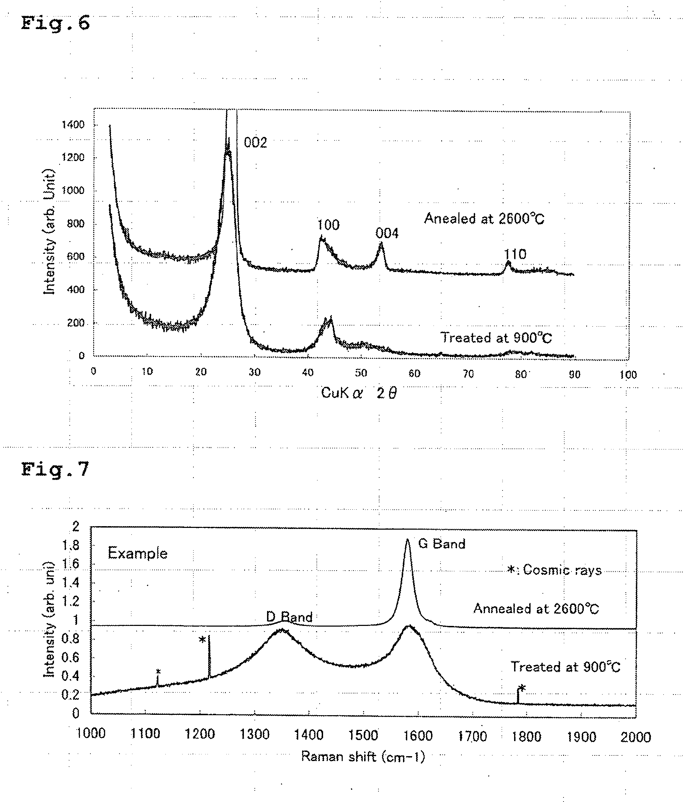

Further, X-ray diffraction analysis and Raman spectroscopic analysis were performed on the carbon fibrous structure before and after the high temperature heat treatment in order to examine changes in these analyses. The results are shown in Figs. 6 and 7, respectively.

Additionally, it was found that the carbon fibrous structures had an area based circle-equivalent mean diameter of 72.8 $\mu$m, bulk density of 0.0032 g/cm$^3$, Raman $I_D/I_G$ ratio of 0.090, TG combustion temperature of 786 °C, spacing of 3.383 A, particle's resistance of 0.0083 $\Omega\cdot$cm, and density after decompression of 0.25 g/cm$^3$. The mean diameter of the granular parts in the carbon fibrous structures was determined as 443 nm (SD 207 nm), that is 7.38 times larger than the outer diameter of the carbon fibers in the carbon fibrous structure. The mean roundness of the granular parts was 0.67 (SD 0.14).

Further, when the destruction test for carbon fibrous structure was performed according to the above mentioned procedure, the initial average fiber length ($D_{50}$) determined 30 minutes after the application of ultrasound was stated was found to be 12.8 $\mu$m, while the mean length $D_{50}$ determined 500 minutes after the application of ultrasound was stated was found to be 6.7 $\mu$m, which value was about half the initial value. This result showed that many breakages were given in the fine carbon fibers of the carbon fibrous structure. Whereas the variability (decreasing) rate for the diameter of granular part was only 4.8%, when the mean diameter ($D_{50}$) of the granular part determined 500 minutes after the application of ultrasound was stated was compared with the initial average diameter ($D_{50}$) of the granular parts determined 30 minutes after the application of ultrasound was stated. Considering measurement error, etc., it was found that the granular parts themselves were hardly destroyed even under the load condition that many breakages were given in the fine carbon, and the granular parts still function as the binding site for the fibers mutually.

Separately, 0.22 g of the obtained carbon fibrous structures were added to 10 g of an epoxy resin (ADEKA RESIN™ EP 4100E, epoxy equivalent: 190, manufactured by Asahi Denka Co., Ltd.) and a hardener (ADEKA HARDENER™ EH3636-AS, manufactured by Asahi Denka Co., Ltd.) and the content of the carbon fibrous structures was adjusted to be 2% by weight. After 10 minutes of mixing, the mixture was developed to a film using a doctor blade with a gap of 200 $\mu$m. The film was then hardened at 170 °C for 30 minutes, and the hardened film was analyzed for its surface electrical resistance. It was found to be 276 Q/cm$^2$.

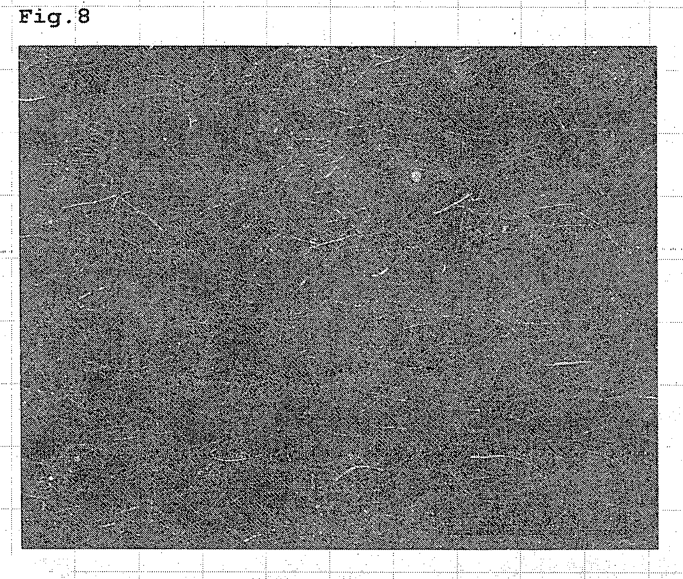

Another similar epoxy resin composite film were prepared as above mentioned except the content of the carbon fibrous structures was set to be 0.5% by weight. The optical micrograph of the film is shown in Fig. 8. It is apparent from Fig. 8 that the carbon fibrous structures showed a good dispersibility in the resin matrix.

Table 2 provides a summary of the various physical properties as determined in Example 1.

[Table 1]

| Particle Distribution (pieces) | Example 1 |
|---|---|
| <50 $\mu$m | 49 |
| 50 $\mu$m to <60 $\mu$m | 41 |
| 60 $\mu$m to 70 $\mu$m | 34 |
| 70 $\mu$m to <80 $\mu$m | 32 |
| 80 $\mu$m to <90 $\mu$m | 16 |
| 90 $\mu$m to <100 $\mu$m | 12 |
| 100 $\mu$m to <110 $\mu$m | 7 |
| >110 $\mu$m | 16 |
| Area based circle-equivalent mean diameter | 72.8 $\mu$m |

[Table 2]

| | Example 1 |
|---|---|
| Area based circle-equivalent mean diameter | 72.8 $\mu$m |
| Bulk density | 0.0032g/cm$^3$ |
| $I_D/I_G$ ratio | 0.090 |
| TG combustion temperature | 786 °C |
| Spacing for (002) faces | 3.383A |
| Particle's resistance at 0.5 g/cm$^3$ | 0.0173 $\Omega\cdot$cm |
| Particle's resistance at 0.8 g/cm$^3$ | 0.0096 $\Omega\cdot$cm |
| Particle's resistance at 0.9 g/cm$^3$ | 0.0083 $\Omega\cdot$cm |
| Density after decompression | 0.25g/cm$^3$ |

(Example 2)

By the CVD process, carbon fibrous structures were synthesized using a part of the exhaust gas from the generation furnace as a recycling gas in order to use as the carbon source the carbon compounds such as methane, etc., included in the recycling gas, as well as a fresh toluene.

The synthesis was carried out in the presence of a mixture of ferrocene and thiophene as the catalyst, and under the reducing atmosphere of hydrogen gas. Toluene and the catalyst as a fresh raw material were heated to 380 °C along with the hydrogen gas in a preheat furnace, while a part of the exhaust gas taken out from the lower end of the generation furnace was used as a recycling gas. After it was adjusted to 380 °C, it was mixed with the fresh raw material gas on the way of the supplying line for the fresh raw material to the generation furnace. The mixed gas was then supplied to the generation furnace.

.The composition ratio in the recycling gas used were found to be $CH_4$ 7.5%, $C_6H_6$ 0.3%, $C_2H_2$ 0.7%, $C_2H_6$ 0.1%, CO 0.3%, $N_2$ 3.5%, and $H_2$ 87.6% by the volume based molar ratio. The mixing flow rate was adjusted so that the mixing molar ratio of methane and benzene in the raw material gas to be supplied to the generation furnace, $CH_4/C_6H_6$ was set to 3.44 (wherein, it was considered that the toluene in the fresh raw material gas had been decomposed at 100% to $CH_4:C_6H_6$ = 1:1 by the heating in the preheat furnace.

In the final raw material gas, $C_2H_2$, $C_2H_6$, and CO which were involved in the recycling gas to be mixed were naturally included. However, since these ingredients were very small amount, they may substantially be ignored as the carbon source.

Then they were underwent thermal decomposition at 1250 °C in order to obtain the carbon fibrous structures (first intermediate) in an analogous fashion as Example 1.

The constitution of the generation furnace used for the carbon fibrous structures (first intermediate) was the same as that of Example 1, except that the cylindrical-shaped collision member 3 was omitted. The raw material gas supplying rate to the generation furnace was 1850 NL/min. , and the pressure was 1.03 atms as in the case of Example 1.

The synthesized first intermediate was baked at 900 °C in nitrogen gas in order to remove hydrocarbons such as tar and to obtain a second intermediate. The R value of the second intermediate measured by the Raman spectroscopic analysis was found to be 0.83. Sample for electron microscopes was prepared by dispersing the first intermediate into toluene. SEM photo and TEM photo obtained for the sample are in much the same with those of Example 1 shown in Figs 1 and 2, respectively.

Further, the second intermediate underwent a high temperature heat treatment at 2600°C. The obtained aggregates of the carbon fibrous structures underwent pulverization using an air flow pulverizer in order to produce the carbon fibrous structures according to the present invention.

A sample for electron microscopes was prepared by dispersing ultrasonically the obtained carbon fibrous structures into toluene. SEM photo and TEM photo obtained for the sample are in much the same with those of Example 1 shown in Figs 3 and 4, respectively.

Separately, the obtained carbon fibrous structures were mounted on a sample holder for electron microscope, and observed for the particle distribution. The obtained results are shown in Table 3.

Further, X-ray diffraction analysis and Raman spectroscopic analysis were performed on the carbon fibrous structure before and after the high temperature heat treatment in order to examine changes in these analyses. The results are in much the same with those of Example 1 shown in Figs. 6 and 7, respectively.

Additionally, it was found that the carbon fibrous structures had an area based circle-equivalent mean diameter of 75.8 $\mu$m, bulk density of 0.005 g/cm$^3$, Raman $I_D/I_G$ ratio of 0.086, TG combustion temperature of 807 °C, spacing of 3.386 A, particle's resistance of 0.0077 $\Omega$·cm, and density after decompression of 0.26 g/cm$^3$.

The mean diameter of the granular parts in the carbon fibrous structures was determined as 349.5 nm (SD 180.1 nm), that is 5.8 times larger than the outer diameter of the carbon fibers in the carbon fibrous structure. The mean roundness of the granular parts was 0.69 (SD 0.15).

Further, when the destruction test for carbon fibrous structure was performed according to the above mentioned procedure, the initial average fiber length ($D_{50}$) determined 30 minutes after the application of ultrasound was stated was found to be 12.4 $\mu$m, while the mean length $D_{50}$ determined 500 minutes after the application of ultrasound was stated was found to be 6.3 $\mu$m, which value was about half the initial value. This result showed that many breakages were given in the fine carbon fibers of the carbon fibrous structure. Whereas the variability (decreasing) rate for the diameter of granular part was only 4.2%, when the mean diameter ($D_{50}$) of the granular part determined 500 minutes after the application of ultrasound was stated was compared with the initial average diameter ($D_{50}$) of the granular parts determined 30 minutes after the application of ultrasound was stated. Considering measurement error, etc., it was found that the granular parts themselves were hardly destroyed even under the load condition that many breakages were given in the fine carbon, and the granular parts still function as the binding site for the fibers mutually.

Separately, 0.22 g of the obtained carbon fibrous structures were added to 10 g of an epoxy resin (ADEKA RESIN™ EP 4100E, epoxy equivalent: 190, manufactured by Asahi Denka Co., Ltd.) and a hardener (ADEKA HARDENER™ EH3636-AS, manufactured by Asahi Denka Co., Ltd.) and the content of the carbon fibrous structures was adjusted to be 2% by weight. After 10 minutes of mixing, the mixture was developed to a film using a doctor blade with a gap of 200 $\mu$m. The film was then hardened at 170 °C for 30 minutes, and the hardened film was analyzed for its surface electrical resistance. It was found to be 280 $\Omega$/cm$^2$.

Another similar epoxy resin composite film were prepared as above mentioned except the content of the carbon fibrous structures was set to be 0.5% by weight. The optical micrograph of the film was observed using an optical microscope. As with that of Example 1 shown in Fig. 8, the carbon fibrous structures showed a good dispersibility in the resin matrix.

Table 3 provides a summary of the various physical properties as determined in Example 2.

[Table 3]

| Particle Distribution (pieces) | Example 2 |
| --- | --- |
| <50 $\mu$m | 48 |
| 50 $\mu$m to <60 $\mu$m | 39 |
| 60 $\mu$m to 70 $\mu$m | 33 |
| 70 $\mu$m to <80 $\mu$m | 30 |
| 80 $\mu$m to <90 $\mu$m | 12 |

(continued)

| Particle Distribution (pieces) | Example 2 |
|---|---|
| 90 $\mu$m to <100 $\mu$m | 15 |
| 100 $\mu$m to <110 $\mu$m | 3 |
| >110 $\mu$m | 18 |
| Area based circle-equivalent mean diameter | 75.8 $\mu$m |

[Table 4]

| | Example 2 |
|---|---|
| Area based circle-equivalent mean diameter | 75.8 $\mu$m |
| Bulk density | 0.004g/cm$^3$ |
| $I_D/I_G$ ratio | 0.086 |
| TG combustion temperature | 807 °C |
| Spacing for (002) faces | 3.386 A |
| Particle's resistance at 0.5 g/cm$^3$ | 0.0161 $\Omega$·cm |
| Particle's resistance at 0.8 g/cm$^3$ | 0.0089 $\Omega$·cm |
| Particle's resistance at 0.9 g/cm$^3$ | 0.0077 $\Omega \cdot$ cm |
| Density after decompression | 0.26g/cm$^3$ |

## Claims

1. A carbon fibrous structure comprising a three dimensional network of carbon fibers, said carbon fibers each having an outside diameter of 15 to 100 nm, wherein said fibrous structure comprises a granular part with which said carbon fibers are bound in a state that said carbon fibers extend outwardly from the granular part, the granular part being produced in a growth process of the carbon fibers and the size of granular part being 1.3 or more of times larger than the outside diameter of the carbon fibers, **characterized by** said carbon fibrous structure having an area-based circle-equivalent mean diameter of 50 to 100 $\mu$m and having a powder electric resistance determined under a pressed density of 0.8 g/cm$^3$ that is within the range of 0.001 to 0.010 $\Omega$·cm.

2. The carbon fibrous structure according to Claim 1, wherein said carbon fibrous structure has a bulk density of 0.0001 - 0.05g/cm$^3$.

3. The carbon fibrous structure according to one of Claim 1 or 2, wherein $I_D/I_G$ of said carbon fibrous structure determined by Raman spectroscopy is not more than 0.2.

4. The carbon fibrous structure according to one of Claims 1 - 3, wherein said carbon fibrous structure has a combustion initiation temperature in air of not less than 750 °C.

5. The carbon fibrous structure according to one of Claims 1 - 4, wherein the carbon fibers are produced using as carbon sources at least two carbon compounds which have different decomposition temperatures.

## Patentansprüche

1. Carbonfasergebilde, das ein dreidimensionales Netzwerk von Carbonfasern umfasst, wobei die Carbonfasern jeweils einen Außendurchmesser von 15 bis 100 nm aufweisen, wobei die Faserstruktur einen körnigen Teil umfasst, mit dem die Carbonfasern in einem Zustand, in dem die Carbonfasern von dem körnigen Teil nach außen verlaufen, gebunden sind, wobei der körnige Teil in einem Wachstumsprozess der Carbonfasern erzeugt worden ist und wobei die Größe des körnigen Teils 1,3-mal oder mehrmals größer als der Außendurchmesser der Carbonfasem ist, **dadurch gekennzeichnet, dass** das Carbonfasergebilde einen flächenbasierten kreisäquivalenten mittleren Durchmesser von 50 bis 100 $\mu$m aufweist und einen unter einer gepressten Dichte von 0,8 g/cm$^3$ bestimmten elektrischen Pulverwiderstand, der innerhalb des Bereichs von 0,001 bis 0,010 $\Omega \cdot$ cm liegt, aufweist.

2. Carbonfasergebilde nach Anspruch 1, bei der das Carbonfasergebilde eine Fülldichte von 0,0001 - 0,05 g/cm$^3$ aufweist.

3. Carbonfasergebilde nach einem der Ansprüche 1 oder 2, bei dem $I_D/I_G$ des Carbonfasergebildes, durch Raman-Spektroskopie bestimmt, höchstens 0,2 beträgt.

4. Carbonfasergebilde nach einem der Ansprüche 1-3, bei der das Carbonfasergebilde eine Verbrennungsinitiierungstemperatur in Luft von mindestens 750 °C aufweist.

5. Carbonfasergebilde nach einem der Ansprüche 1-4, bei der die Carbonfasern unter Verwendung mindestens zweier Kohlenstoffverbindungen, die unterschiedliche Zerfallstemperaturen aufweisen, als Kohlenstoffquellen hergestellt worden sind.

## Revendications

1. Structure fibreuse de carbone comprenant un réseau tridimensionnel de fibres de carbone, lesdites fibres de carbone ayant chacune un diamètre extérieur de 15 à 100 nm, dans laquelle ladite structure fibreuse comprend une partie granulaire avec laquelle lesdites fibres de carbone sont liées dans un état où lesdites fibres de carbone s'étendent vers l'extérieur depuis la partie granulaire, la partie granulaire étant produite dans un procédé de croissance des fibres de carbone et la taille de la partie granulaire étant plus grande de 1,3 fois ou plus que le diamètre extérieur des fibres de carbone, **caractérisée en ce que** ladite structure fibreuse de carbone a un diamètre moyen en équivalent du cercle basé sur la surface de 50 à 100 $\mu$m et ayant une résistivité électrique de poudre déterminée sous une densité pressée de 0,8 g/cm$^3$ qui est dans la plage de 0,001 à 0,010 $\Omega\cdot$ cm.

2. Structure fibreuse de carbone selon la revendication 1, dans laquelle ladite structure fibreuse de carbone a une densité apparente de 0,0001 - 0,05g/cm$^3$.

3. Structure fibreuse de carbone selon l'une des revendications 1 ou 2, dans laquelle l'$I_D/I_G$ de ladite structure fibreuse de carbone déterminée par spectroscopie de Raman n'est pas supérieur à 0,2.

4. Structure fibreuse de carbone selon l'une des revendications 1 à 3, dans laquelle ladite structure fibreuse de carbone a une température d'initiation de combustion dans l'air pas inférieure à 750°C.

5. Structure fibreuse de carbone selon l'une des revendications 1 à 4, dans laquelle les fibres de carbone sont produites en utilisant comme sources de carbone au moins deux composés de carbone qui ont différentes températures de décomposition.

Fig.1

Fig.2

Fig.3

Fig.4A

Fig.4B

Fig.5

## Fig.6

## Fig.7

Fig.8

Fig.9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2862578 B
- JP 2004119386 A

- WO 03014441 A1